# EUROPÄISCHE PATENTANMELDUNG

(11) **EP 2 360 807 A1**
(43) Veröffentlichungstag der Anmeldung: **24.08.2011**
(21) Anmeldenummer: 10154571.3
(22) Anmeldetag: 24.02.2010
(51) Int. Cl.: H02H 11/00

(54) **Eingangsschaltung mit Verpol- und Kurzschlussschutz für eine DC-Stromversorgung oder einen Schaltregler**

(71) Anmelder: SIEMENS AKTIENGESELLSCHAFT, 80333 München (DE)
(72) Erfinder: Cyron, Michael, 76187 Karlsruhe (DE); Kort, Valentin, 76829 Landau (DE); Klamm, Arnold, 76870 Kandel (DE)

(57) **Zusammenfassung**

Es wird vorgeschlagen eine Eingangsschaltung (ES) für eine DC-Stromversorgung oder für einen Schaltregler (SR) mit zwei Anschlüssen (E1, E2) zum Anschließen eines ersten und eines niedrigeren, zweiten Gleichspannungspotentials, mit einer einem Pufferkondensator (C) aufweisenden Pufferschaltung (Kp, S2, C), welche zum Puffern einer Gleichspannung vorgesehen ist, und mit einem Verpolschutz (S1). Mittels geeigneter Maß-nahmen ist auch im Falle eines Kurschlusses der Eingangsanschlüsse (E1, E2) bzw. der Zuleitungen eine Netzausfallüberbrückung gewährleistet.

## Beschreibung

Die Erfindung betrifft eine Eingangsschaltung für eine DC-Stromversorgung oder für einen Schaltregler mit zwei Anschlüssen zum Anschließen eines ersten und eines niedrigeren, zweiten Gleichspannungspotentials, mit einer einen Pufferkondensator aufweisenden Pufferschaltung, welche zum Puffern einer Gleichspannung vorgesehen ist, und mit einem Verpolschutz. Darüber hinaus betrifft die Erfindung eine DC-Stromversorgung sowie einen Schaltregler.

Eine derartige Eingangsschaltung ist allgemein bekannt. Wird diese z. B. in einer Stromversorgung eingesetzt, so ist es aufgrund der Pufferschaltung erforderlich, einen Kurzschluss an den Eingangsanschlüssen schnell zu erkennen, um durch geeignete Maßnahmen auch in diesem Fall zu gewährleisten, dass die in der Pufferschaltung gespeicherte Energie für die Überbrückung des Netzausfalls genutzt wird. Eine Netzausfallüberbrückung ist beispielsweise notwendig, um in einem Pufferbetrieb Daten für eine CPU-Baugruppe eines Automatisierungsgerätes zu sichern, wodurch ein Datenverlust vermieden wird. Darüber hinaus muss im Falle eines Kurzschlusses der Eingangsanschlüsse weiterhin gewährleistet sein, dass die Erfordernisse im Hinblick auf das EMV (Elektromagnetische Verträglichkeit)-Verhalten der Eingangsschaltung, insbesondere die Erfordernisse im Hinblick auf das so genannte "Surge-Verhalten", eingehalten werden.

Um die Überbrückung eines Netzausfalls in Stromversorgungen zu gewährleisten, kann eine sekundärseitige Pufferung vorgesehen werden. Ein Kurzschluss der Eingangsklemmen auf der Primärseite hat in diesem Fall keinen Einfluss auf die Netzausfallüberbrückung, die Energie wird nicht auf die Primärseite übertragen. Eine derartige Maßnahme bedeutet allerdings einen Mehraufwand an Bauteilen und Schaltungstechnik, weil die zugelassene maximale Spannung sekundärseitig geringer ist als primärseitig. Aufgrund einer sekundärseitig geringeren Spannung ist es daher erforderlich, einen Kondensator mit einer höheren Kapazität vorzusehen, um die für eine ausreichende Netzausfallüberbrückung erforderliche Energie sekundärseitig zu puffern. Ein Kondensator mit einer höheren Kapazität bedeutet allerdings, dass mehr Platz auf der Leiterplatte für die Bestückung der Leiterplatte mit diesem Kondensator benötigt wird; ferner entstehen dadurch höhere Kosten.

Der vorliegenden Erfindung liegt die Aufgabe zugrunde, eine Eingangsschaltung der eingangs genannten Art zu schaffen, welche auch im Falle eines Kurzschlusses der Eingangsanschlüsse bzw. der Zuleitungen eine Netzausfallüberbrückung gewährleistet. Darüber hinaus sind eine DC-Stromversorgung sowie ein Schaltregler mit einer derartigen Eingangsschaltung anzugeben.

Diese Aufgabe wird im Hinblick auf die Eingangsschaltung durch die im kennzeichnenden Teil des Anspruchs 1 angegebenen, im Hinblick auf die DC-Stromversorgung mit den im Anspruch 5 und im Hinblick auf den Schaltregler mit den im Anspruch 6 angegebenen Maßnahmen gelöst.

Vorteilhaft ist, dass ein ohnehin erforderlicher Verpolschutz als steuerbarer Schalter ausgestaltet ist, wobei dieser zum Trennen der Eingangsanschlüsse bzw. der Zuleitungen von der Pufferschaltung vorgesehen ist.

In einer Ausgestaltung der Erfindung ist vorgesehen, dass
- die Ansteuereinheit mit einer Spule und mit einem zweiten steuerbaren Schalter versehen ist,
- ein erster Lastanschluss des ersten steuerbaren Schalters an die Pufferschaltung und an einen ersten Lastanschluss des zweiten steuerbaren Schalters angeschlossen ist, dessen zweiter Lastanschluss an den Steueranschluss des ersten steuerbaren Schalters angeschlossen ist, welcher mit einem der Potentialanschlüsse verbunden ist,
- ein erster Anschluss der Spule und der Steueranschluss des zweiten steuerbaren Schalters mit dem anderen Potentialanschluss verbunden ist und
- ein zweiter Anschluss der Spule mit dem zweiten Lastanschluss des ersten steuerbaren Schalters verbunden ist.

Durch diese Maßnahmen wird mit einfachen schaltungstechnischen Mitteln die Trennung der Eingangsanschlüsse bzw. der Zuleitungen von der Pufferschaltung verwirklicht. Ein Kurzschluss bewirkt aufgrund einer Stromänderung, dass sich über der Spule eine Spannung aufbaut, wobei der zweite steuerbare Schalter quasi verzögerungsfrei die Spannung auswertet und den ersten steuerbaren Schalter öffnet. Dadurch wird die Entladung des Pufferkondensators über die Eingangsanschlüsse verhindert.

Gemäß den im Anspruch 3 angegebenen Maßnahmen ist die Ansteuereinheit in den Pfad des niederen, in einer Ausgestaltung der Erfindung gemäß den im Anspruch 4 angegebenen Maßnahmen in den Pfad des höheren Potentials geschaltet.

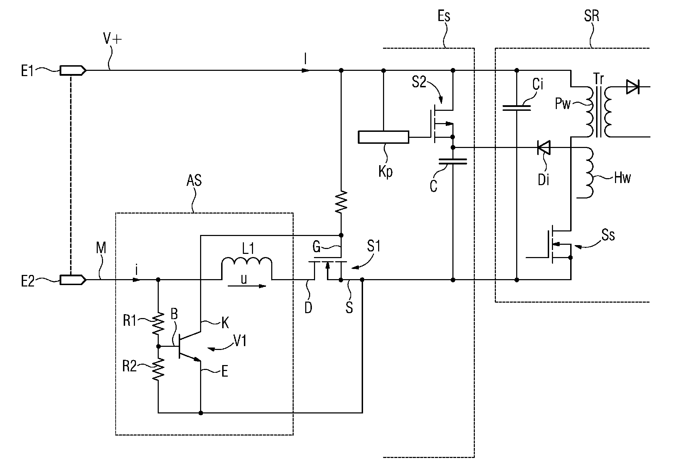

Die Erfindung wird nachfolgend anhand eines Ausführungsbeispiels unter Bezugnahme auf die einzige Figur der Zeichnung näher erläutert.

Die Figur der Zeichnung zeigt eine Eingangsschaltung ES, an welche ein Schaltregler SR angeschlossen ist. Dieser Schaltregler SR weist einen Schalttransistor in Form eines n-Kanal-Feldeffekt-Transistors Ss, einen Kondensator Ci, einen Transformator Tr sowie eine Hilfswicklung Hw auf, wobei eine von dieser Hilfswicklung Hw erzeugte Spannung über eine Diode Di einer Pufferschaltung der Eingangsschaltung rückgekoppelt wird. Die Funktions- und Wirkungsweise des Schaltreglers SR ist an sich bekannt und braucht daher nicht näher erläutert zu werden.

Die Eingangsschaltung ES ist an Anschlüssen E1, E2 mit einem ersten und einem niedrigeren, zweiten Gleichspannungspotential beaufschlagt, wobei im vorliegenden Beispiel das erste Potential ein 24V-Potential V+ und das zweite Potential ein Massepotential M ist. Dies bedeutet, dass der Schaltregler mit einer 24V-Gleichspannung versorgt wird. In einem Normalbetrieb ist ein erster steuerbarer Schalter S1 in Form eines n-Kanal-Feldeffekt-Transistors geschlossen, wodurch ein durch den Schalttransistor Ss primärseitig getakteter Strom I vom Anschluss E1 über die Primärwicklung des Transformators, über den steuerbaren Schalter S1 und eine Spule L1 zum Anschluss E2 fließt. Dabei wird ein Pufferkondensator C mit einer von der Hilfswicklung Hw rückgekoppelten Spannung aufgeladen. Die im Pufferkondensator C gespeicherte Energie ist für eine ausreichende Netzausfallüberbrückung vorgesehen, wobei für die Dauer der Netzausfallüberbrückung die Gleichspannungsversorgung an den Anschlüssen E1, E2 unterbrochen ist und der Betrieb des Schaltreglers SR für die Dauer des Entladevorgangs des Kondensators C bis zu einer für den Schaltregler geeigneten Spannung noch gesichert ist. Der Pufferkondensator C ist Bestandteil einer Pufferschaltung, die ferner einen steuerbaren Schalter S2 in Form eines p-Kanal-Feldeffekt-Transistors und einen Komparator Kp umfasst, welcher die 24V-Gleichspannung mit einer Referenzspannung vergleicht.

Im Folgenden wird angenommen, dass die Anschlüsse E1, E2 versehentlich kurzgeschlossen sind, was in der Zeichnung mittels einer gestrichelten Linie zwischen diesen Anschlüssen E1, E2 angedeutet ist. Die im Komparator Kp hinterlegte Referenzspannung wird schlagartig unterschritten, was zur Folge hat, dass der Komparator Kp den steuerbaren Schalter S2 schließt. Um zu verhindern, dass sich der Pufferkondensator C über die kurzgeschlossenen Anschlüsse E1, E2 entlädt, ist eine Ansteuereinheit AS vorgesehen, welche eine Spule L1 sowie einen mit Widerständen R1, R2 beschalteten steuerbaren Schalter V1 in Form eines bipolaren Transistors aufweist. Der Kurzschluss der 24V-Leitung mit der Masseleitung bewirkt einen kurzzeitigen Stromfluss im Mikrosekundenbereich. Dabei fließt ein Strom i und über der Spule L1, welche als Surge-Verzögerungselement dient und eine Störstrahlunterdrückung bewirkt, baut sich aufgrund der Stromänderung eine Spannung u auf. Der zweite steuerbare Schalter V1 erfasst die Spannung u und wirkt derart auf den Steueranschluss G des ersten steuerbaren Schalters S1 ein, dass der Schalter S1 sich öffnet bzw. sperrt, wodurch der Pufferkondensator C sich nun nur über den Schalttransistor Ss des Schaltreglers SR entladen kann. Die Energie des Pufferkondensators C wird somit fast vollständig für die Sekundärseite des Schaltreglers SR genutzt.

## Patentansprüche

1. Eingangsschaltung für eine DC-Stromversorgung oder für einen Schaltregler (SR), mit
- zwei Anschlüssen (E1, E2) zum Anschließen eines ersten und eines niedrigeren, zweiten Gleichspannungspotentials,
- einer einen Pufferkondensator (C) aufweisenden Pufferschaltung (Kp, S2, C), welche zum Puffern einer Gleichspannung vorgesehen ist, und
- einem Verpolschutz (S1),
**dadurch gekennzeichnet,**
- **dass** der Verpolschutz (S1) ein erster, mit einem der Potentialanschlüsse (E1, E2) verbundener steuerbarer Schalter (S1) ist und
- **dass** eine Ansteuereinheit (AS; R1, R2, L1, V1) vorgesehen ist, welche im Falle eines Kurzschlusses der Anschlüsse (E1, E2) oder der Zuleitungen den ersten steuerbaren Schalter (S1) öffnet.

2. Eingangsschaltung nach Anspruch 1, **dadurch gekennzeichnet, dass**
- die Ansteuereinheit (AS; R1, R2, L1, V1) mit einer Spule (L1) und mit einem zweiten steuerbaren Schalter (R1, R2, V1) versehen ist,
- ein erster Lastanschluss (S) des ersten steuerbaren Schalters (S1) an die Pufferschaltung (Kp, S2, C) und an einen ersten Lastanschluss (E) des zweiten steuerbaren Schalters (R1, R2, V1) angeschlossen ist, dessen zweiter Lastanschluss (K) an den Steueranschluss (G) des ersten steuerbaren Schalters (S1) angeschlossen ist, welcher mit einem der Potentialanschlüsse (E1) verbunden ist,
- ein erster Anschluss der Spule (L1) und der Steueranschluss (B) des zweiten steuerbaren Schalters (R1, R2, V1) mit dem anderen Potentialanschluss (E2) verbunden sind und
- ein zweiter Anschluss der Spule (L1) mit dem zweiten Lastanschluss (D) des ersten steuerbaren Schalters (S1) verbunden ist.

3. Eingangsschaltung nach Anspruch 2, **dadurch gekennzeichnet, dass**
- der erste steuerbare Schalter (S1) ein n-Kanal-FeldeffektTransistor und der zweite steuerbare Schalter (R1, R2, V1) ein bipolarer npn-Transistor ist und
- der eine Potentialanschluss (E1) mit dem ersten und der andere Potentialanschluss (E2) mit dem zweiten Potential beaufschlagt ist.

4. Eingangsschaltung nach Anspruch 2, **dadurch gekennzeichnet, dass**
- der erste steuerbare Schalter (S1) ein p-Kanal-FeldeffektTransistor, der zweite steuerbare Schalter (V1) ein bipolarer pnp-Transistor ist,
- der eine Potentialanschluss (E1) mit dem ersten und der andere Potentialanschluss (E2) mit dem zweiten Potential beaufschlagt ist.

5. DC-Stromversorgung mit einer Eingangsschaltung nach einem der Ansprüche 1 bis 4.

6. Schaltregler mit einer Eingangsschaltung nach einem der Ansprüche 1 bis 4.
